# FASCICULE DE BREVET EUROPEEN

(11) **EP 1 166 425 B1**
(45) Date de publication et mention de la délivrance du brevet: **14.02.2007**
(21) Numéro de dépôt: 00990837.7
(22) Date de dépôt: 28.12.2000
(51) Int. Cl.: H02K 5/173, H02K 5/128, H02K 7/06

(54) **MOTEUR A ROTOR ETANCHE AVEC ROULEMENT A BILLES**
MOTOR MIT ABGEDICHTETEM ROTOR, DER KUGELLAGER AUFWEIST
SEALED MOTOR ROTOR WITH BALL BEARING

(30) Priorité: 30.12.1999 FR 9916771
(43) Date de publication de la demande: 02.01.2002
(73) Titulaire: Crouzet Automatismes, 26000 Valence (FR)
(72) Inventeur: COYAC, Cyrille, Thomson-CSF Propr Intellectuelle, F-94117 Arcueil Cedex (FR); VINAY, Jean-Paul, Thomson-CSF Prop Intellectuelle, F-94117 Arcueil Cedex (FR); GINGEYNE, Marc, Thomson-CSF Propr Intellectuelle, F-94117 Arcueil Cedex (FR)
(74) Mandataire: Tripodi, Paul
(86) Numéro de dépôt international: PCT/FR2000/003722
(87) Numéro de publication internationale: WO 2001/050576

(56) Documents cités:
- EP-A- 0 893 636
- CH-A- 315 972
- DE-A- 2 939 560
- DE-C- 4 023 756
- FR-A- 2 620 876
- PATENT ABSTRACTS OF JAPAN vol. 015, no. 486 (E-1143), 10 décembre 1991 (1991-12-10) & JP 03 212140 A (SHIBAURA ENG WORKS CO LTD), 17 septembre 1991 (1991-09-17)

## Description

L'invention concerne principalement les moteurs à rotor étanche, qui sont destinés à être utilisés en pratique lorsqu'on ne souhaite pas mettre le stator du moteur en contact avec un environnement liquide ou gazeux présentant des dangers.

Un exemple typique d'application est un moteur d'actionnement d'une électrovanne qui conduit ou interrompt le passage de gaz vers une chaudière à gaz. Les parties électriques du moteur, en pratique le stator, ne doivent pas être en contact avec le gaz. D'autres applications peuvent bien entendu être envisagées.

De tels moteurs sont souvent constitués de la manière suivante : un ensemble de rotor pourvu d'un roulement à billes est monté dans un bloc de support massif qui forme une paroi séparant l'environnement du côté du rotor de l'environnement du côté du stator. Le roulement à billes est monté dans un logement de ce bloc de support, et le rotor dépasse à l'extérieur du logement. Un ensemble statorique est monté autour du rotor et vient s'appuyer contre le bloc de support, sur lequel il est par exemple vissé.

L'invention concerne plus précisément le montage du roulement à billes dans ce bloc de support.

Etant donné que l'invention s'applique de manière tout à fait avantageuse, mais cependant pas exclusivement, aux moteurs à rotor étanche, on va préciser en outre la manière dont est faite l'étanchéité dans un tel moteur avant d'indiquer l'objet de l'invention.

Dans un moteur à rotor étanche, il faut séparer l'environnement du côté du rotor de l'environnement du côté du stator, et empêcher par exemple le passage de gaz à travers le roulement à billes ou à travers l'entrefer entre rotor et stator du moteur.

Pour cela, on utilise une cloche d'étanchéité qui vient envelopper toute la partie rotorique et dont la paroi latérale, cylindrique et amagnétique, vient se glisser dans l'entrefer entre rotor et stator. Toute la partie statorique, avec notamment les conducteurs d'alimentation du stator, est située à l'extérieur de la cloche. La cloche s'appuie par ailleurs de manière étanche contre le bloc de support, c'est-à-dire contre la paroi solide qui sépare l'environnement côté stator de l'environnement côté rotor. De cette manière, on a séparé de manière étanche les deux environnements. La cloche enferme non seulement le rotor mais aussi le roulement à billes.

L'invention propose un montage particulier du roulement à billes dans le bloc de support qui doit le contenir. Ce montage est particulièrement adapté aux moteurs à rotor étanche.

Le roulement à billes est glissé dans le logement prévu dans ce bloc de support, et le diamètre de ce logement est ajusté pour qu'il y pénètre sans friction. Dans l'art antérieur, le roulement à billes était inséré à force, ou bien était inséré sans friction mais il fallait alors utiliser en général un repliage de tôle ou un moyen similaire pour venir immobiliser, en rotation comme en translation, le palier fixe du roulement dans son logement.

Selon l'invention, on propose d'immobiliser le palier fixe par un joint élastique annulaire, de préférence torique, intercalé entre la partie statorique du moteur et la périphérie du palier fixe et mis en compression par la fixation de la partie statorique contre le bloc de support.

Ainsi, après que le roulement à billes a été inséré sans friction dans le bloc de support, le rotor dépassant à l'extérieur de ce logement, on vient monter la partie statorique autour du rotor et on la fixe contre le bloc de support, en général par vissage, ce vissage venant appliquer le joint annulaire contre le palier fixe du roulement. D'une part, cette pression empêche que le roulement sorte de son logement. D'autre part, la friction engendrée par cette pression empêche que le palier fixe se mette à tourner même s'il tend à être entraîné en rotation par le rotor.

Le document DE-C-4 023 756 décrit un moteur électrique correspondant à l'art antérieur.

L'invention propose donc un moteur électrique comportant un bloc de support pourvu d'un logement pour un roulement à billes, un rotor dépassant hors de ce logement, et un ensemble statorique monté autour du rotor et fixé contre le bloc de support, ce moteur étant caractérisé en ce qu'un joint annulaire, de préférence torique, est serré entre la partie statorique et la périphérie d'un palier fixe du roulement à billes, ce joint exerçant une pression d'immobilisation en translation axiale et une friction d'immobilisation en rotation du palier fixe.

Dans le cas d'un moteur étanche utilisant une cloche entourant le rotor, on prévoit que la base de la cloche, repliée radialement (donc parallèlement au plan général du joint annulaire), est intercalée entre l'ensemble statorique et le joint annulaire; cette base de la cloche est maintenue pressée contre le joint par le serrage de l'ensemble statorique sur le bloc de support. Le joint appuie non seulement sur la périphérie du palier fixe du roulement (sans réaliser d'étanchéité à cet endroit), mais également sur une partie du bloc de support afin que l'étanchéité soit faite entre la cloche et le bloc de support sur toute la périphérie de la cloche.

De préférence, le logement du roulement à billes possède, du côté d'introduction du roulement, un décrochement cylindrique de diamètre légèrement supérieur à celui du palier fixe, et le joint d'étanchéité est disposé dans ce décrochement, le diamètre et l'épaisseur radiale du joint étant telles que la périphérie du joint s'appuie contre la paroi cylindrique interne de ce décrochement.

Avec la disposition selon l'invention, aucune contrainte excessive n'est exercée sur le roulement, donc aucune déformation, ce qui permet un fonctionnement optimal de celui-ci.

Le niveau de compression du joint permet de prendre en compte les variations dimensionnelles des divers éléments en cas de gradients de température importants. Le roulement reste maintenu sous une contrainte suffisante à son immobilisation, malgré ces variations.

L'étanchéité est obtenue du même coup grâce à ce joint, dans le cas d'un moteur à rotor étanche.

L'invention propose enfin également un procédé de montage de moteur électrique, comportant les étapes suivantes : préparation d'un ensemble rotorique comprenant un rotor et un roulement à billes, montage de l'ensemble dans un logement de roulement à billes d'un bloc de support, le rotor dépassant hors du logement, mise en place d'un joint annulaire, de préférence torique, contre un palier fixe du roulement, montage d'un ensemble statorique autour du rotor, et serrage de l'ensemble statorique contre le bloc de support, ce serrage pressant le joint contre le palier fixe.

Pour un moteur à rotor étanche, l'étape de montage de l'ensemble statorique est précédée d'une étape de montage d'une cloche d'étanchéité en matière amagnétique autour du rotor, la cloche ayant une base repliée venant s'appuyer contre le joint et l'ensemble statorique venant s'appuyer contre cette base pour la presser contre le joint.

Les caractéristiques et avantages de l'invention apparaîtront à la lecture de la description détaillée qui suit et qui est faite en référence aux dessins annexés dans lesquels :
- la figure 1 représente une vue générale d'un exemple de moteur selon l'invention ;
- la figure 2 représente une vue agrandie détaillée du montage du roulement à billes.

L'invention sera décrite à propos d'un moteur pas-à-pas à rotor étanche, destiné à commander une vanne d'alimentation d'une chaudière à gaz. Elle est applicable à d'autres exemples.

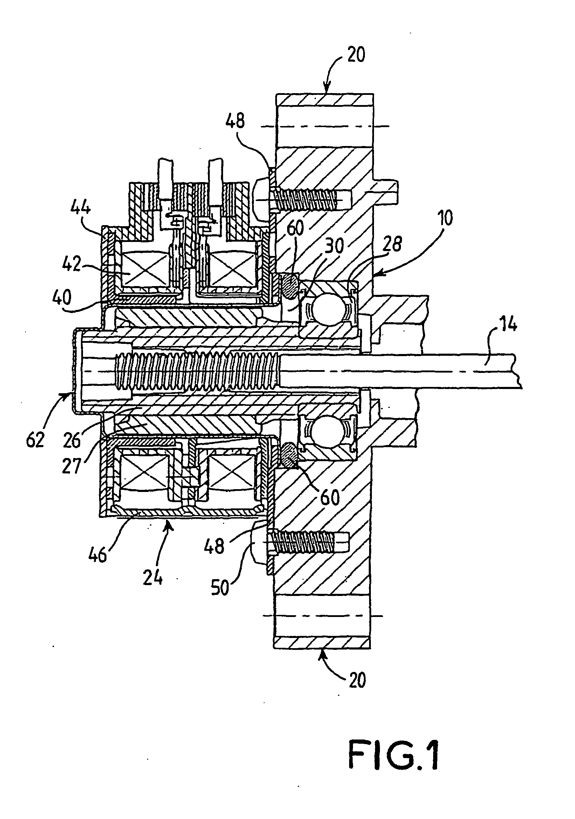

Le moteur pas-à-pas est monté sur un bloc de support 10 massif qui constitue une paroi séparant l'environnement rempli de gaz de l'environnement extérieur. Le corps de la vanne actionnée par ce moteur n'est pas représenté. L'actionnement se fait par l'intermédiaire d'une tige ou axe 14 déplaçable longitudinalement. Le corps de l'électrovanne entoure l'extrémité de la tige 14 et est fermé par le bloc de support 10 du côté droit de la figure 1.

Le rôle du moteur est d'entraîner l'axe 14 en déplacement longitudinal, par exemple pour ouvrir ou fermer un clapet non représenté.

Le bloc de support massif 10 comporte une partie transversale 20 en forme de bride, et ci-après désignée par « bride 20 », sur laquelle on viendra fixer d'une part le corps de vanne (à droite de la bride 20), et d'autre part le stator du moteur (à gauche de la bride 20). Cette partie transversale est percée de part en part dans la direction de l'axe 14, de manière à permettre le passage de cet axe.

Le moteur électrique proprement dit comprend principalement un ensemble statorique 24, un rotor 26, et un roulement à billes 28. L'ensemble statorique et le rotor sont à gauche de la bride 20, le roulement à billes est placé dans un logement 30 percé dans la bride 20. L'axe 14 s'étend de part et d'autre de la bride 20, à travers un trou percé dans le fond du logement 30.

Le rotor est de préférence un rotor à aimants permanents. Les aimants sont désignés par 27 et sont répartis à la périphérie d'un corps de rotor qui est de préférence en matière plastique.

Le stator comporte des pièces polaires pourvues de bobines alimentées électriquement, en regard de la zone de rotor comportant les aimants permanents. Cette zone de rotor est située en dehors du bloc de support 10, à gauche de celui-ci.

L'axe 14 est fileté extérieurement dans une partie où il peut coopérer avec un filetage complémentaire de l'intérieur du rotor; des moyens non représentés, sont prévus pour empêcher la rotation de l'axe 14. Il en résulte que lorsque le rotor tourne, l'axe 14 se déplace longitudinalement.

L'ensemble statorique 24, constitué des pièces polaires 40, des bobines 42, de flasques latéraux de maintien 44, d'une ceinture cylindrique 46, et d'une plaque de support 48, est vissé sur la bride 20 par des vis 50. Ces vis appliquent la plaque 48 contre la bride 20.

Le vissage de la plaque de support 48 sur la bride vient presser un joint annulaire 60, de préférence torique, dans le logement 30 du roulement à billes, pressant ainsi le roulement à billes dans le fond de son logement.

Pour un moteur à rotor étanche, comme c'est le cas sur les figures, on prévoit une cloche d'étanchéité 62, recouvrant tout le rotor pour le séparer du stator et pour réaliser l'étanchéité entre le milieu dans lequel se trouve le rotor et le milieu dans lequel se trouve le stator.

Cette cloche 62 possède une partie de paroi cylindrique située entre les pièces polaires du stator et les aimants permanents du rotor. Elle est mince, en métal amagnétique (inox de préférence) ou en matière plastique, de manière à pouvoir être intercalée dans l'entrefer entre rotor et stator sans perturber le fonctionnement électromagnétique du moteur. Le sommet de la cloche, à gauche sur la figure, enferme l'extrémité du rotor. La base 80 de la cloche est repliée radialement, parallèlement à la bride transversale 20 pour venir s'appuyer contre le joint 60. Cette base est donc repliée parallèlement au plan général du joint annulaire, c'est-à-dire perpendiculairement à l'axe de rotation du rotor. La base repliée est prise en sandwich entre la plaque 48 de support du stator et le joint, de sorte que le serrage de la plaque 48 sur la bride presse la base de la cloche sur le joint 60 qui lui-même vient serrer le roulement à billes 28 dans son logement.

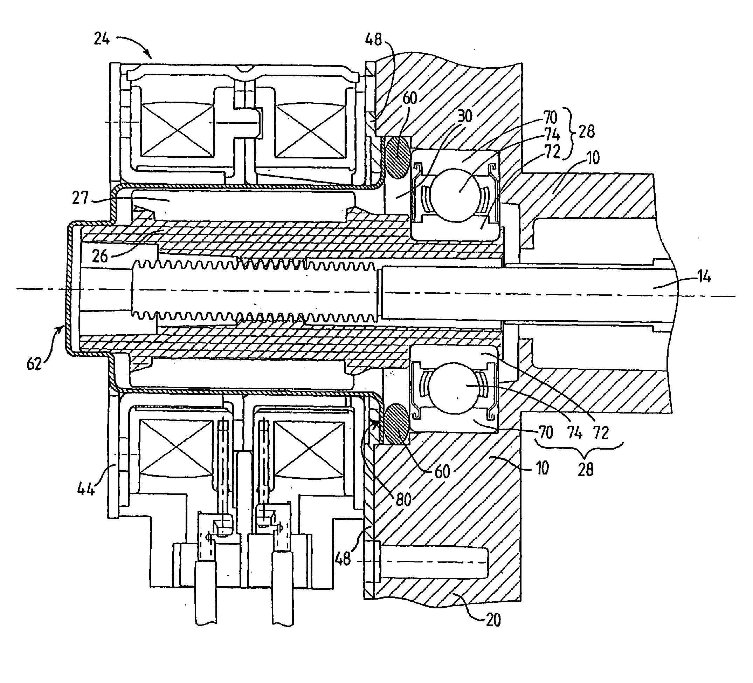

La figure 2 représente en vue agrandie le montage de la cloche 62, du joint 60 et du roulement à billes 28. Le logement 30 du roulement à billes est en forme de cuvette cylindrique à deux étages, le premier étage étant de diamètre légèrement plus grand que le deuxième. Le premier étage contient le joint 60 ; le deuxième étage contient le roulement à billes. Le roulement à billes vient s'appuyer dans le fond de la cuvette formée par ce deuxième étage, et ce fond de cuvette est percé pour laisser passer l'axe 14.

Le roulement à billes 28 comporte un palier fixe 70 (qui ne tourne pas lorsque le rotor tourne), et un palier mobile 72, entraîné en rotation par le rotor. Le palier mobile est serti sur le corps du rotor (sertissage par ultrasons sur un corps en matière plastique). Le diamètre extérieur nominal du palier fixe est égal au diamètre intérieur nominal de la deuxième partie de la cuvette, et les tolérances d'usinage sont adaptées à une pénétration sans frottement.

Lorsqu'on introduit l'ensemble du rotor avec son axe 14 et son roulement à billes 28 dans le logement percé pour l'axe 14, le roulement à billes vient s'engager tout juste, sans friction, dans la deuxième partie de la cuvette. Le joint 60, de préférence torique, est alors mis en place dans la première partie de la cuvette. Le diamètre extérieur du joint (non comprimé) correspond sensiblement au diamètre intérieur de cette première partie, et ce diamètre augmente si on comprime le joint dans le sens de la profondeur de la cuvette. Le joint s'applique alors de manière étanche sur la paroi cylindrique intérieure de la première partie du logement 30.

Le diamètre intérieur du joint torique (donc l'épaisseur du joint torique dans le sens radial) est choisi de telle sorte que le joint n'appuie que sur le palier fixe 70 du roulement, mais pas sur le reste du roulement.

On met ensuite en place la cloche 62 sur le rotor. La base 80 vient s'engager dans le premier étage de la cuvette, en appui sur le joint ; puis on place l'ensemble statorique, monté sur sa plaque de support 48, autour de la cloche. Enfin, on visse la plaque 48 sur la bride 20, ce qui serre la base 80 de la cloche contre le joint 60. Celui-ci se comprime et d'une part vient presser axialement le palier 70 (donc l'ensemble du roulement) dans le fond du logement 30, et d'autre part vient s'appuyer radialement contre la paroi latérale cylindrique du premier étage du logement 30.

La base repliée de la cloche vient de préférence juste pénétrer dans le logement 30, mais c'est le contact du joint contre la cloche et contre la paroi du logement qui assure l'étanchéité aux gaz qui auraient pu passer d'un côté à l'autre de la bride 20 à travers l'ouverture de passage de l'axe 14 et à travers les roulements à bille notamment. La cloche 62 confine le gaz autour du rotor, sans le laisser passer vers le stator ou plus généralement sans le laisser passer vers l'extérieur du côté gauche de la bride.

Comme on le voit sur la figure 2, on prévoit de préférence que la plaque 48 comporte, au niveau de la base 80 de la cloche 62, un petit décrochement cylindrique de même diamètre que le premier étage de la cuvette constituant le logement 30. Ce décrochement pénètre très légèrement dans le logement, afin de bien centrer la base de la cloche dans le logement contre le joint 60.

On a ainsi décrit un mode de montage de roulement à billes adaptable tout particulièrement à des moteurs à rotor étanche.

## Revendications

1. Moteur électrique comportant un bloc de support (10) pourvu d'un logement (30) pour un roulement à billes (28), un rotor (26) dépassant hors de ce logement, et un ensemble statorique (24) monté autour du rotor et fixé contre le bloc de support, ce moteur étant **caractérisé en ce qu'**un joint annulaire (60), de préférence torique, est serré entre l'ensemble statorique et la périphérie d'un palier fixe (70) du roulement à billes, ce joint exerçant une pression d'immobilisation en translation axiale et une friction d'immobilisation en rotation du palier fixe.

2. Moteur selon la revendication 1, **caractérisé en ce qu'**il comporte en outre une cloche d'étanchéité (62) entourant le rotor, la cloche comportant une base (80) repliée radialement et intercalée entre.l'ensemble statorique et le joint annulaire (60), la base de la cloche étant maintenue pressée contre le joint par le serrage de l'ensemble statorique sur le bloc de support.

3. Moteur selon la revendication 2, **caractérisé en ce que** le joint appuie également sur une partie du bloc de support afin que l'étanchéité soit faite entre la cloche et le bloc de support sur toute la périphérie de la cloche.

4. Moteur selon la revendication 3, **caractérisé en ce que** le logement (30) du roulement à billes possède, du côté d'introduction du roulement, un décrochement cylindrique de diamètre légèrement supérieur à celui du palier fixe (70), et le joint d'étanchéité (60) est disposé dans ce décrochement, le diamètre et l'épaisseur radiale du joint étant telles que la périphérie du joint s'appuie contre la paroi cylindrique interne de ce décrochement.

5. Moteur selon la revendication 4, **caractérisé en ce que** l'ensemble statorique comporte une plaque de support (48) venant s'appliquer contre le bloc de support (10) en pressant la base de la cloche contre le joint, la plaque de support comportant, au niveau de la base de la cloche, un décrochement de diamètre correspondant au diamètre d'ouverture du logement (30), ce décrochement pénétrant légèrement dans le logement lorsque l'ensemble statorique est mis en place.

6. Procédé de montage de moteur électrique, comportant les étapes suivantes : préparation d'un ensemble rotorique comprenant un rotor (26) et un roulement à billes (28), montage de l'ensemble dans un logement (30) de roulement à billes d'un bloc de support (10), le rotor dépassant hors du logement, mise en place d'un joint annulaire (60), de préférence torique, contre un palier fixe (70) du roulement, montage d'un ensemble statorique (24) autour du rotor, et serrage de l'ensemble statorique contre le bloc de support, ce serrage pressant le joint contre le palier fixe.

7. Procédé selon la revendication 6, **caractérisé en ce que** l'étape de montage de l'ensemble statorique est précédée d'une étape de montage d'une cloche d'étanchéité (62) en matière amagnétique autour du rotor, la cloche ayant une base repliée (80) venant s'appuyer contre le joint et l'ensemble statorique venant s'appuyer contre cette base pour la presser contre le joint.

## Claims

1. Electric motor comprising a support block (10) provided with a housing (30) for a ball-bearing (28), a rotor (26) salient from this housing, and a stator assembly (24) fitted around the rotor and fixed against the support block, this motor being **characterized in that** an annular seal (60), preferably a ring seal, is clamped between the stator part and the circumference of a fixed part (70) of the ball-bearing, this seal exerting an immobilising pressure in axial translation and an immobilising friction in rotation of the fixed part of the bearing

2. Motor according to claim 1, **characterized in that** it further comprises a tight bell housing (62) enveloping the rotor, the bell housing comprising a radially folded base (80) inserted between the stator assembly and the ring seal (60), the base of the bell housing being kept pressed against the seal by clamping the stator assembly onto the support block.

3. Motor according to claim 2, **characterized in that** the seal also presses on a part of the support block so that tight sealing is achieved between the bell housing and the support block over the whole circumference of the bell housing.

4. Motor according to claim 3, **characterized in that** the ball-bearing housing (30) has, on the side whereby the bearing is inserted, a cylindrical recess having a slightly larger diameter than that of the fixed bearing (70), and that the seal (60) is disposed in this recess, the diameter and radial thickness of the seal being such that the circumference of the seal presses against the internal cylindrical wall of this recess.

5. Motor according to claim 4, **characterized in that** the stator assembly comprises a support plate (48) applied against the support block (10) pressing the base of the bell housing against the seal, the support plate comprising, at the level of the base of the bell housing, a recess with a diameter corresponding to the opening diameter of the housing (30), this recess penetrating slightly into the housing when the stator assembly is fitted.

6. Method for assembling an electric motor, comprising the following steps: preparation of a rotor assembly comprising a rotor (26) and a ball-bearing (28), fitting the assembly in a ball-bearing housing (30) of a support block (10) with the rotor salient from the housing, fitting of an annular seal (60) preferably a ring seal, against a fixed part (70) of the bearing, fitting of a stator assembly (24) around the rotor, and securing the stator assembly against the support block, this securing pressing the seal against the fixed bearing.

7. Method according to claim 6, **characterized in that** the step of fitting the stator assembly is preceded by a step of fitting a tight bell housing (62) made of nonmagnetic material around the rotor, the bell housing having a folded base (80) pressing against the seal and the stator assembly pressing against this base to press the latter against the seal.

## Patentansprüche

1. Elektromotor mit einem Tragkörper (10), in dem eine Aufnahme (30) für ein Kugellager (28) ausgebildet ist, einem diese Aufnahme nach außen durchdringenden Läufer (26) sowie einer um den Läufer herum montierten und auf dem Tragkörper befestigten Ständereinheit (24), welcher Motor **dadurch gekennzeichnet ist, dass** eine vorzugsweise ringförmig ausgebildete Umlaufdichtung (60) zwischen der Ständereinheit und dem umlaufenden Rand eines feststehenden Laufrings (70) des Kugellagers eingeklemmt ist, wobei die genannte Dichtung den feststehenden Laufring durch den von ihr ausgeübten Druck in Axialrichtung schubwirksam und durch Reibung drehwirksam blockiert.

2. Motor nach Anspruch 1, **dadurch gekennzeichnet, dass** er darüber hinaus eine den Läufer umschließende Dichtungsglocke (62) mit einem radial umbogenen und zwischen die Ständereinheit und den Dichtungsring (60) geführten unteren Rand (80) umfasst, welcher untere Glockenrand beim Festziehen der Ständereinheit auf dem Tragkörper gegen die Dichtung gepresst wird.

3. Motor nach Anspruch 2, **dadurch gekennzeichnet, dass** sich die Dichtung auch an einem Teil des Tragkörpers abstützt, um die Dichtigkeit zwischen der Glocke und dem Tragkörper längs des gesamten Umfangsrands der Glocke zu gewährleisten.

4. Motor nach Anspruch 3, **dadurch gekennzeichnet, dass** die Aufnahme (30) des Kugellagers auf der Einsatzseite des Kugellagers einen zylindrischen Absatz aufweist, dessen Durchmesser geringfügig größer ist als der Durchmesser des feststehenden Laufrings (70) und dass die Dichtung (60) in diesen Absatz eingesetzt wird, wobei der Durchmesser und die Dicke der Dichtung in Radialrichtung so bemessen sind, dass sich die äußere Umfangsfläche der Dichtung an der zylindrischen Innenwand des genannten Absatzes abstützt.

5. Motor nach Anspruch 4, **dadurch gekennzeichnet, dass** die Ständereinheit eine Trägerplatte (48) umfasst, die auf dem Tragkörper (10) befestigt wird und dabei den unteren Rand der Glocke gegen die Dichtung presst, wobei die Trägerplatte im Bereich des unteren Randes (80) der Glocke einen kleinen zylindrischen Absatz aufweist, dessen Durchmesser genauso groß ist wie der Öffnungsdurchmesser der Aufnahme (30), und der genannte Absatz beim Aufsetzen der Ständereinheit geringfügig in die Aufnahme eingreift.

6. Verfahren zur Montage eines Elektromotors, das folgende Schritte umfasst: Vorbereitung der aus einem Läufer (26) und einem Kugellager (28) bestehenden Läufereinheit, Montage der Einheit in einer Kugellageraufnahme (30) eines Tragkörpers (10), wobei der Läufer die Aufnahme nach außen durchdringt, Aufsetzen einer vorzugsweise ringförmigen Umlaufdichtung (60) auf einen feststehenden Laufring (70) des Kugellagers, Montage einer Ständereinheit (24) um den Läufer herum und Festziehen der Ständereinheit auf dem Tragkörper, wodurch die Dichtung gegen den feststehenden Laufring gepresst wird.

7. Verfahren nach Anspruch 6, **dadurch gekennzeichnet, dass** der Montage der Ständereinheit ein Montageschritt vorausgeht, in dem eine Dichtungsglocke (62) aus einem unmagnetischen Werkstoff um den Läufer herum montiert wird, wobei die genannte Glocke einen umbogenen unteren Rand (80) aufweist, der auf die Dichtung aufgesetzt wird, und die Ständereinheit anschließend auf diesen Rand aufgesetzt wird, um ihn gegen die Dichtung zu pressen.
